# DEMANDE DE BREVET EUROPEEN

(11) **EP 2 535 833 A1**
(43) Date de publication de la demande: **19.12.2012**
(21) Numéro de dépôt: 11305746.7
(22) Date de dépôt: 15.06.2011
(51) Int. Cl.: G06F 21/00, G08B 13/14

(54) **Procédé de sécurisation d'un appareil électrique**

(71) Demandeur: Gemalto SA, 92190 Meudon (FR)
(72) Inventeur: Meridiano, Jean-Luc, 83170 Tourves (FR); Arnoux, Christophe, 13390 Auriol (FR)

(57) **Abrégé**

L'invention présente un procédé d'appairage entre un dispositif électrique client et un dispositif électrique CRS, permettant, la réattribution des rôles, et empêchant la mise en service du dispositif client sans une authentification auprès du dispositif CRS.

L'invention présente en outre un dispositif électrique muni d'un élément sécurisé capable d'empêcher sa mise en service sans une authentification réussie.

## Description

L'invention porte en particulier sur un appairage réalisé entre plusieurs dispositifs électroniques afin de rendre ces dispositifs inopérants en cas de vol.

Les dispositifs électroniques domestiques, tels que par exemple les téléviseurs, les ordinateurs, ou les lecteurs multimédia, sont une cible fréquente de vols, par leur facilité de transport, et de revente.

En effet, un dispositif électronique dérobé ne peut pas être tracé, désactivé, ou bloqué, comme pourrait l'être par exemple un téléphone portable.

L'évolution constante de la domotique, et ainsi l'apparition d'électronique complexe dans du petit, voire moyen, électroménager tels que les fours, les réfrigérateurs, ou les grilles pain, augmente d'autant leur prix de revente, ce qui en fait autant de cibles potentielles de vol.

La présente invention propose une solution à cette problématique, en rendant un dispositif électronique inopérant en cas de vol.

Pour cela l'invention concerne, dans un premier temps : un procédé de sécurisation d'un premier dispositif électrique dit client1, avec un second dispositif électrique dit CRS, chacun de ces dispositifs comportant au moins un élément électronique sécurisé. Ces éléments électroniques sécurisés possédant au moins un moyen de communication, une mémoire contenant un identifiant, et un processeur.

Le procédé comportant au moins les étapes de :
- réception, par le client1, d'un ordre de mise en service issu de l'utilisateur,
- Authentification mutuelle des éléments sécurisés, grâce à un algorithme d'authentification symétriques,
- Si l'authentification réussit, mise en service du dispositif client1.

Ce procédé peut comporter les étapes préalables suivantes :
- un canal sécurisé est établi entre l'élément sécurisé du client1, et l'élément sécurisé du CRS,
- une clé dite clé de communication est définie entre l'élément sécurisé du client1, et l'élément sécurisé du CRS,
- enregistrement, dans l'élément sécurisé du client1, d'un identifiant de l'élément sécurisé du CRS, ainsi que de la clé de communication associée,
- enregistrement, dans l'élément sécurisé du CRS, d'un identifiant de l'élément sécurisé du client1, ainsi que de la clé de communication associée.

Ce canal sécurisé peut etre établi selon un schéma cryptographique symétrique et un code dit code d'appairage, connu de chacun des éléments sécurisés.

Ce code d'appairage peut être généré par un des éléments sécurisés, ou bien être fourni par l'utilisateur à au moins un des éléments (3, 4).

La clé de communication peut être générée par l'élément sécurisé du CRS, ou bien être générée aléatoirement.

Dans un mode d'implémentation, le procédé peut comporter au moins un troisième dispositif électrique dit client2, possédant un élément électronique sécurisé. L'élément sécurisé contenu dans le client2 contient au moins un identifiant de l'élément sécurisé contenu dans le CRS, ainsi qu'une clé de communication associée.
- le second élément sécurisé (élément sécurisé contenu dans le CRS) contient un identifiant l'élément sécurisé contenu dans le client2, ainsi que de la clé de communication associée.

Dans ce mode d'implémentation, le procédé peut comprendre une étape de réallocation, qui consiste en :
- déclenchement de la réallocation,
- authentification mutuelle entre l'élément sécurisé du CRS, et l'ensemble dés éléments sécurisés dont les identifiants sont enregistrés dans la mémoire de l'élément sécurisé du CRS,
- choix d'un « nouveau CRS » parmi les éléments sécurisés authentifiés,
- copie des identifiants et des clés correspondantes, contenues dans la mémoire de l'élément sécurisé du CRS, dans la mémoire de l'élément sécurisé du « nouveau CRS »
- remplacement, dans la mémoire des éléments sécurisés contenus dans les dispositifs autres que le « nouveau CRS », de l'identifiant du CRS par celui du nouveau CRS.

Pour cela l'invention concerne également un dispositif électrique contenant un élément sécurisé comportant au moins un moyen de communication, une mémoire et un processeur, cet élément sécurisé est apte à empêcher la mise en service du dispositif électrique sans une authentification réussie avec un second élément sécurisé, contenu dans un second dispositif électrique.

D'autres caractéristiques et avantages de l'invention ressortiront clairement de la description qui en est faite ci-après, à titre indicatif et nullement limitatif, en référence aux dessins annexés dans desquels :
- La figure 1 représente l'appairage selon l'invention de deux dispositifs électroniques
- La figure 2 représente un système comportant 3 dispositifs électroniques appairés selon l'invention

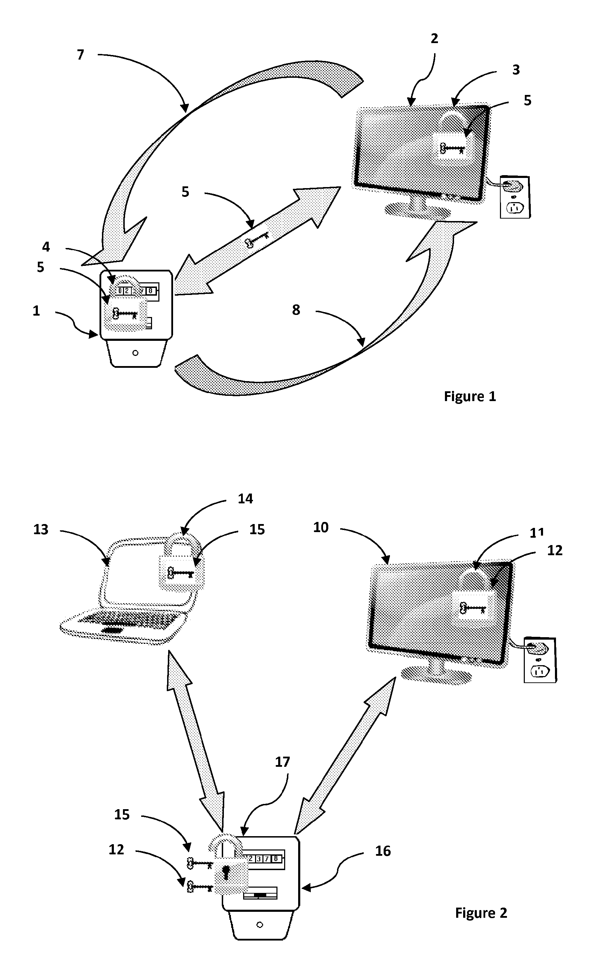

La figure 1 illustre une implémentation de l'invention avec un premier dispositif électronique 1, dit « CRS » (Contrôleur de Réseau Sécurisé) illustré par un compteur électrique, et un second dispositif électronique 2 illustré par un téléviseur.

Chacun de ces dispositifs comporte un élément sécurisé, 3 et 4, selon l'invention, par exemple une puce électronique. Dans un mode particulièrement avantageux, cet élément sécurisé est un composant électronique intégré aux dispositifs, et ainsi non extractible. Pour cette raison, la puce d'un dispositif, et le dispositif en lui-même pourront être confondus dans la présente description, sans préjudice à la compréhension de l'invention.

Les puces embarquent au moins une mémoire non volatile, une mémoire volatile, des moyens de calcul ainsi que des moyens de communication.

La mémoire non volatile des puces contient au moins un identifiant « unique ». La notion d'unicité s'apprécie au moins au regard de l'ensemble des dispositifs en présence. Cet identifiant peut avantageusement être un numéro de série de l'élément sécurisé, mais il peut également être tout information permettant de différencier les éléments sécurisés, par exemple un identifiant défini par l'utilisateur s'il lui est possible de l'enregistrer (dispositif électriques munis d'un moyen de saisie, par exemple un clavier ou une télécommande).

La puce 3 d'un dispositif électronique tel que le téléviseur 2 de la figure 1, selon l'invention permet d'autoriser ou non le démarrage du dispositif électronique en tant que tel.

En effet, au démarrage téléviseur 2 doit obtenir une autorisation de démarrage de la puce 3 qu'il contient. Sans cette autorisation, le téléviseur 2 ne fonctionne pas. L'expression « mise en service » sera utilisée dans la présente description pour désigner la mise, d'un dispositif, dans un état où il peut fournir le service pour lequel il a été conçu. Cette expression désigne, par exemple, pour un téléviseur l'état dans lequel il permet d'afficher des images et du son demandés par l'utilisateur. Dans la majorité des cas la mise en service correspond à la mise sous tension. Toutefois, il est possible que des appareils possèdent des états de veille (par exemple au cours desquels ils affichent l'heure), donc sous tension, que la présente description tient à distinguer de l'état fonctionnel à proprement parlé.

Dans un mode d'implémentation, la puce est connectée à l'alimentation du dispositif. Ainsi, lors de la mise sous tension du dispositif, la puce verrouille une composante maitresse et essentielle de l'appareil, par exemple le bloc « alimentation à découpage » pour un téléviseur, le tuner pour un décodeur satellite, etc ...

Dans un état dit initial, un dispositif électronique 2 (ici le téléviseur) est dans un mode non appairé. Dans ce mode là, il est inopérant. Son allumage ne permet d'accéder qu'à une procédure d'initialisation.

Dans un mode préféré d'implémentation de l'invention, chacune des puces 3 et 4, contenues dans les dispositifs 1 et 2, possèdent, dans leur mémoire non volatile au moins une information sur le type du dispositif auquel elle est associée. Ce type peut par exemple être « CRS », « dispositif audio » , « dispositif vidéo », « téléviseur », etc.

Lors de cette procédure d'initialisation telle que décrite dans la figure 1, la puce 3 du téléviseur 2, à initialiser, va rechercher les dispositifs électroniques communicants accessibles. Cette communication se fait au travers de tout moyen de communication connu de l'homme de l'art, tel qu'un câble réseau, une connexion CPL (pour Courant Porteur en Ligne), une communication radiofréquence, ...

Cette recherche peut se faire, par exemple selon le modèle défini dans la norme Bluetooth, ou par tout autre moyen connu de l'homme de l'art.

La puce 3 du téléviseur 2 va recueillir le ou les types de chacun de ces dispositifs ainsi identifiés. Ici, un seul et unique autre dispositif communicant 1, le compteur électrique (de type CRS).

La puce 3 du téléviseur va identifier le dispositif 1 de type CRS, donc le compteur électrique, et initier une procédure d'appairage avec la puce 4 qu'il contient.

Dans ce mode d'implémentation, si aucun dispositif de type CRS n'est identifié, la procédure d'initialisation échoue.

La procédure d'appairage se fait de préférence à l'initiative du dispositif non appairé, ici le téléviseur 2.

Par exemple, celui-ci envoie à la puce 4 du compteur 1 une requête d'appairage 7. L'appairage se fait en vérifiant la connaissance, de chacun des dispositifs à appairer, d'un code dit code d'appairage.

Ce code, peut être généré par un des deux appareils, et inséré dans l'autre. Cette procédure nécessite un moyen d'affichage dans, au moins le dispositif générant le code afin de le transmettre à l'utilisateur, et un moyen de saisie dans au moins le dispositif devant le recevoir. Dans un mode préféré, c'est le CRS qui génère ce code, et il est ensuite entré dans le nouveau dispositif à appairer.

Dans l'exemple de la figure 1, le compteur électrique 1 génère (grâce à sa puce 4) un code, qui est affiché sur son écran. L'utilisateur saisit ce code auprès de la puce 3 du téléviseur 4 grâce aux touches de la télécommande.

Dans un autre mode de réalisation, ce code peut également être choisi arbitrairement par l'utilisateur, auquel cas il est nécessaire de le fournir au CRS 1 et au dispositif à appairer 2.

La vérification de la connaissance mutuelle de ce code d'appairage peut se faire par tous les moyens connus, notamment celui défini dans le protocole Bluetooth, ou bien par une des quelconques méthodes cryptographiques connues d'authentification mutuelle basées sur un secret commun.

Ce code permet d'établir un canal de communication sécurisé entre les deux éléments sécurisés selon un algorithme symétrique quelconque.

La procédure d'appairage selon l'invention, prévoit un échange des identifiants des deux éléments sécurisés. L'élément sécurisé du dispositif en cours d'appairage envoie son identifiant à l'élément sécurisé du CRS, et l'élément sécurisé du CRS envoie son identifiant à l'élément sécurisé contenu dan le dispositif en cours d'appairage. Cet échange d'identifiant peut par exemple se faire au travers du canal de communication sécurisé.

La procédure d'appairage se termine par la création d'une clef 5 dite clef de communication. Cette clef peut être générée par tout moyen connu de l'homme de l'art, par exemple aléatoirement ou selon l'algorithme Diffie-Hellman.

Cette clé peut être générée par l'élément sécurisé du CRS (par exemple aléatoirement, ou à partir d'un nombre aléatoire), et ensuite transmise à l'élément sécurisé du dispositif en cours d'appairage au travers du canal de communication sécurisé.

Dans un mode d'implémentation, cette clé peut être définie par l'utilisateur, auquel cas, il pourra, soit la rentrer dans l'élément sécurisé du CRS, qui la transférera à l'élément sécurisé du dispositif en cours d'appairage au travers du canal de communication sécurisé, soit la rentrer dans chacun des éléments sécurisés au travers des interfaces de saisies des dispositifs correspondants.

Cette clé est propre aux deux dispositifs appairés. Ainsi chaque appairage entre deux dispositifs engendrera une clé de communication. Un dispositif électrique (hors CRS) selon l'invention, ne peut être appairé qu'avec un seul autre dispositif : un CRS. En revanche, le CRS est appairé avec l'ensemble des dispositifs électriques selon l'invention.

Cette clef 5 est conservée dans la mémoire non volatile des éléments sécurisés 3 et 4 du CRS 1 ainsi que du dispositif en cours d'appairage 2.

Dans l'exemple de la figure 1, cette clef est enregistrée dans la puce 3 du téléviseur 2, et dans la puce 4 du compteur électrique 1.

La puce 3 du téléviseur 2 contient donc, en plus des informations déjà présentes, l'identifiant du compteur électrique 1 et la clé de communication associée 5.

La puce 4 du compteur électrique 1 contient, en plus des informations déjà présentes, l'identifiant du téléviseur 2, et la clef de communication associée 5.

L'élément sécurisé 4 et 17 du CRS 1 et 16 contient l'ensemble des identifiants des dispositifs qui lui ont êtes appairés 2, 10 et 13, ainsi que les clés de communications correspondantes 5, 12 et 15.

Le système décrit dans la figure 2, présente un dispositif CRS 16 selon l'invention, illustré par un compteur électrique, et deux dispositifs appairés 10 et 13, illustrés par un téléviseur et un ordinateur, chacun contenant une puce électronique 11 et 14, selon l'invention. La puce 17 du compteur électrique contient les identifiants des puces 11 et 14 du téléviseur et de l'ordinateur, ainsi que les clés de communication respectives 12 et 15.

Lorsque l'ordinateur 13 est mis en service (par exemple par une mise sous tension), la puce 14 qu'il contient entre dans une phase d'authentifications. Dans cette phase, la puce 14 de l'ordinateur entame une procédure de « mutuelle reconnaissance/vérification » : elle consiste vérifier la présence de la puce 17 du compteur électrique, ainsi que sa connaissance de la clé de communication 15 contenue dans la puce de l'ordinateur. Cette connaissance peut se faire par exemple au travers de l'envoi d'un message à la puce 17 du compteur électrique 16, chiffré à l'aide de la clef de communication 15 enregistrée, et l'attente d'une réponse dépendante du message envoyé, chiffré également par la même clef. Si cette vérification est réussie, la mise en service de l'ordinateur est autorisée.

Si, lors de la phase d'authentification, la puce 17 du compteur électrique n'est pas trouvée, ou s i l'authentification échoue, la puce 14 de l'ordinateur peut avantageusement entrer dans un mode dit d'alerte. Dans ce mode, l'utilisateur est informé, par exemple au travers d'un message affiché sur l'écran de l'ordinateur, de la situation. Cette situation peut par exemple survenir en cas de panne ou d'extinction du compteur électrique, voire en cas de vol de l'ordinateur.

Afin de rendre plus difficile le vol du « CRS » lui-même, un mode d'implémentation de l'invention prévoit un système où à tour de rôle certains appareils qui en ont la capacité, puisse prendre le rôle du « CRS » moyennant échange de clé de façon suffisamment sécurisée.

Dans ce mode, le mécanisme de changement de CRS (aussi appelé mécanisme de réallocation) peut être provoqué aléatoirement ou bien en fonction d'un compteur de temps.

Par exemple, dans le système décrit dans la figure 2, au déclenchement du mécanisme de changement de CRS, la puce 17 du compteur électrique recense les dispositifs appairés, actifs à cet instant donné, et aptes à prendre la fonction de CRS, puis les authentifie chacun à tour de rôle. La capacité des dispositifs à prendre la fonction de CRS peut avantageusement se faire en fonction du « type » contenu dans les éléments sécurisés respectifs, ou bien en fonction de capacités techniques des puces contenues dans les appareils ou des appareils eux-mêmes. Par exemple la capacité à générer une clé de communication, ou bien à communiquer cette clé à l'utilisateur. Une fois ces dispositifs identifiés, ici l'ordinateur 13 ainsi que le téléviseur 10, un choix permet de désigner l'un d'eux, dit nouveau CRS. Ce choix peut se faire aléatoirement, ou bien par exemple avec la participation de l'utilisateur. Dans l'exemple de la figure 2, le téléviseur 10. La puce 17 du compteur électrique échange les clés de communication 15 et 12, qu'elle contient avec la puce 11 du téléviseur, qui informe ensuite la puce contenue dans l'ordinateur de son identifiant. La puce 14 contenue dans l'ordinateur inscrit ce nouvel identifiant dans sa mémoire à la place de l'identifiant du précédent CRS, en lui associant la clé de communication 15 déjà enregistrée. Ce mécanisme permet de ne pas provoquer de nouvelles générations de clefs entre les dispositifs et le nouveau CRS. Toutefois, une réinitialisation de l'ensemble des appairages reste une solution conforme à l'invention.

Une fois cette étape terminée, les puces 17 et 14, du compteur électrique 16 et de l'ordinateur 13 contiennent l'identité de la puce 11 du téléviseur 10 ainsi que leurs clés de communications 12, et 15, respectives. La puce du téléviseur 10 quant à elle, contient les identifiants de la puce 17 du compteur électrique 16 et de celle 14 de l'ordinateur 13, ainsi que les clés de communication 12, 15, respectives.

En cas de vol du « CRS », un mode particulièrement avantageux de l'invention prévoit un système de déverrouillage de chaque appareil appairé au « CRS ». Ce système peut consister en une clé commune dite « clé Master », enregistrée dans chacun des appareils lors de la phase d'appairage, qui permet, une fois saisie dans un dispositif, de le remettre dans un état dit non appairé. Dans un mode préféré d'implémentation, cette clé, une fois définie, est enregistrée dans le CRS, qui la transmet à chacun des dispositifs appairés, chiffrée avec la clef de communication correspondante.

Cette clé peut être choisie par l'utilisateur ou bien générée par le CRS, et est, de préférence commune à l'ensemble des dispositifs appairés à un même CRS pour des raisons de simplicité.

Selon un mode de d'implémentation, cette clé peut être contenue dans un dispositif électronique indépendant (par exemple une clé USB) qui sera insérée dans chacun des dispositifs à déverrouiller.

Cette procédure permet également de sortir un dispositif de l'influence du CRS, par exemple pour le vendre.

## Revendications

1. Procédé de sécurisation d'un premier dispositif électrique (2, 10) dit client1, avec un second dispositif électrique (1, 16) dit CRS, chacun desdits dispositifs comportant au moins un élément électronique sécurisé (3 et 4), lesdits éléments (3, 4) possédant au moins un moyen de communication, une mémoire contenant un identifiant, et un processeur, **caractérisé en ce qu'**il comporte au moins les étapes de :
- réception, par ledit client1 (2, 10), d'un ordre de mise en service issu de l'utilisateur,
- Authentification mutuelle desdits éléments sécurisés (3, 4), grâce à un algorithme d'authentification symétriques,
- Si l'authentification réussit, mise en service dudit client1.

2. Procédé selon la revendication 1, **caractérisé en ce que**, dans des étapes préalable,
- un canal sécurisé est établi entre l'élément sécurisé (3, 11) du client1 (2, 10), et l'élément sécurisé (4, 17) du CRS (1, 16),
- une clé dite clé de communication (5, 12) est définie entre l'élément sécurisé (3, 11) du client1 (2, 10), et l'élément sécurisé (4, 17) du CRS (1, 16),
- enregistrement, dans l'élément sécurisé (3, 11) du client1 (2, 10), d'un identifiant de l'élément sécurisé (4, 17) du CRS (1, 16), ainsi que de ladite clé de communication associée (5, 12),
- enregistrement, dans l'élément sécurisé (4, 17) du CRS (1, 16), d'un identifiant de l'élément sécurisé (3, 11) du client1 (2, 10), ainsi que de ladite clé de communication associée (5, 12).

3. Procédé selon la revendication 2, **caractérisé en ce que** ledit canal sécurisé est établi selon un schéma cryptographique symétrique et un code dit code d'appairage, connu de chacun desdits éléments sécurisés (3, 4).

4. Procédé selon la revendication 3, **caractérisé en ce que** ledit code d'appairage est généré par un desdits éléments sécurisés (3, 4).

5. Procédé selon l'une des revendications 3 ou 4, **caractérisé en ce que** ledit code d'appairage est fournit par l'utilisateur à au moins un desdits éléments (3, 4).

6. Procédé selon l'une des revendications 2 à 5, **caractérisé en ce que** ladite clé de communication (5, 12) est générée par l'élément sécurisé (4, 17) du CRS (1, 16).

7. Procédé selon la revendication 6, **caractérisé en ce que** ladite clé de communication (5, 12) est générée aléatoirement.

8. Procédé selon l'une des revendications 2 à 7, **caractérisé en ce qu'**il comporte au moins un troisième dispositif électrique (13) dit client2, possédant un élément électronique sécurisé (14) **caractérisé en ce que**
- ledit élément sécurisé (14) contenu dans le client2 (13) contient au moins un identifiant dudit élément sécurisé (4, 17) contenu dans le CRS (1, 16), ainsi qu'une clé de communication associée (15)
- ledit élément sécurisé (4, 17) contenu dans le CRS (1, 16) contient un identifiant dudit élément sécurisé (14) contenu dans ledit client2 (13), ainsi que de ladite clé de communication associée (15).

9. Procédé selon la revendication 8, **caractérisé en ce qu'**il comprend une étape de réallocation, **caractérisée en ce que** cette étape consiste en :
- déclenchement de la réallocation,
- authentification mutuelle entre l'élément sécurisé (4, 17) du CRS (1, 16), et l'ensemble dés éléments sécurisés (3, 14, 11) dont les identifiants sont enregistrés dans la mémoire dudit élément sécurisé (4, 17) du CRS (1, 16),
- choix d'u n « nouveau CRS » parmi les éléments sécurisés authentifiés (3, 4, 14, 11, 17) ,
- copie des identifiants et des clés correspondantes, contenues dans la mémoire de l'élément sécurisé (4, 17) du CRS (1, 16), dans la mémoire de l'élément sécurisé du « nouveau CRS »
- remplacement, dans la mémoire des éléments sécurisés contenus dans les dispositifs autres que le « nouveau CRS », de l'identifiant du CRS par celui du nouveau CRS.

10. Dispositif électrique contenant un élément sécurisé doté au moins un moyen de communication, une mémoire et un processeur, caractérisé en se que ledit élément sécurisé est apte à empêcher la mise en service dudit dispositif électrique sans une authentification réussie avec un second élément sécurisé, contenu dans un second dispositif électrique.
